# EUROPÄISCHE PATENTSCHRIFT

(11) **EP 0 839 766 B1**
(45) Veröffentlichungstag und Bekanntmachung des Hinweises auf die Patenterteilung: **28.11.2001**
(21) Anmeldenummer: 97118491.6
(22) Anmeldetag: 24.10.1997
(51) Int. Cl.: C02F 3/12, C02F 3/30, C02F 3/06

(54) **Mehrstufiges Verfahren zur weitgehenden Stickstoffelimination in einer Abwasserreinigungsanlage**
Multistage process for the final elimination of nitrigen in a waste water purification installation
Procédé à plusieurs étapes pour l'élimination finale d'azote dans une installation de purification d'eau usée

(30) Priorität: 04.11.1996 DE 19645331
(43) Veröffentlichungstag der Anmeldung: 06.05.1998
(73) Patentinhaber: VA TECH WABAG Deutschland GmbH & Co. KG, 10707 Berlin (DE)
(72) Erfinder: Schmidt, Rolf, 35305 Grünberg (DE)
(74) Vertreter: VA TECH Patente GmbH

(56) Entgegenhaltungen:
- EP-A- 0 019 203
- EP-A- 0 527 123
- DE-C- 4 424 425
- US-A- 4 183 809
- US-A- 5 514 278

## Beschreibung

Die vorliegende Erfindung betrifft ein mehrstufiges Verfahren zur Abwasserreinigung, insbesondere zur Reinigung kommunaler Abwässer. Sie betrifft des weiteren eine mehrstufige Abwasserreinigungsanlage, insbesondere zur Reinigung kommunaler Abwässer.

An Abwasserreinigungsanlagen werden nach Maßgabe verschärfter Einleitungsbestimmungen zunehmend höhere Anforderungen hinsichtlich der Reinigungsleistung gestellt. Dies betrifft namentlich den Kohlenstoffabbau sowie die Stickstoff- und Phosphatelimination. Zur Leistungssteigerung in dieser Hinsicht hat sich der zweistufige Aufbau von Abwasserreinigungsanlagen durchgesetzt. In diesem Zusammenhang ist beispielsweise zu verweisen auf die DE-2640875 C3 und den Aufsatz von B. Böhnke und V. Bili "Denitrifikationsleistung zweistufiger Belebungsanlagen mit erster hochbelasteter Stufe" (Korrespondenz Abwasser, 42. Jg. (1995), S. 1489 bis 1495). Der ersten, hochbelasteten Stufe (z.B. B_{TS} = 2,0 kg BSB₅/kg TS x d) folgt jeweils eine zweite schwachbelastete Stufe (z.B. B_{TS} > 0,15 kg BSB₅/kg TS x d}. Mit Aspekten der Nitrifikation und Denitrifikation von Abwasser befaßt sich im übrigen der Arbeitsbericht der ATV-Fachausschüsse 2.6 und 2.8 "Umwandlung und Elimination von Stickstoff im Abwasser" (Korrespondenz Abwasser, 34. Jg (1987), S. 77 bis 85).

Zum Stand der Technik zählt des weiteren das zweistufige Belebtschlammverfahren gemäß der FR-2160799 A. Das Verfahren arbeitet in beiden Stufen mit je einem Belüftungs- und einem nachgeschalteten Klärbecken. In der ersten Stufe hat das Klärbecken die Aufgabe der Schlammrückhaltung und der Denitrifikation. Die Denitrifikation findet statt, indem aus der Nachklärung der zweiten Stufe nitratreiches Wasser in den Zulauf zum Zwischenklärbecken gefördert wird.

Die DE-3136409 A1 schließlich betrifft die sog. "Injektionstechnologie", bei der durch gezieltes Zugeben von separat gezüchteten Nitrifikanten in die eigentliche Nitrifikationseinheit der Nitrifikationsprozeß stabilisiert wird. In der parallel zu einer Hauptnitrifikation angeordneten Nebennitrifikation werden somit durch entsprechende Betriebsweise Nitrifikanten, also Bakterien, die Ammonium zu Nitrat oxidieren, gezüchtet und bevorratet. Diese Technologie wird insbesondere bei kritischen Abwässern eingesetzt.

Trotz der umfangreichen Bemühungen arbeiten bekannte Abwasserreinigungsverfahren und -anlagen nicht in jeder Hinsicht zufriedenstellend. Zu nennen sind hier insbesondere hohe Betriebskosten, unzureichende Stickstoffelimination und unbefriedigende Betriebssicherheit. Vor diesem Hintergrund liegt der vorliegenden Erfindung die Aufgabe zugrunde, ein mehrstufiges Verfahren zur Abwasserreinigung und eine mehrstufige Abwasserreinigungsanlage zu schaffen, mit denen bei geringen Betriebskosten und hoher Betriebssicherheit eine verbesserte Stickstoff- und Phosphatelimination möglich ist.

Diese Aufgabe wird erfindungsgemäß durch ein mehrstufiges Verfahren zur Abwasserreinigung mit den in Anspruch 1 angegebenen Merkmalen gelöst. Eine zur Lösung dieser Aufgabe geeignete mehrstufige Abwasserreinigungsanlage weist die in Anspruch 14 angegebenen Merkmale auf.

Grundlegendes Merkmal der vorliegenden Erfindung ist somit, daß die erste Reinigungsstufe im Nebenstrom zu der zweiten Reinigungsstufe arbeitet, wobei innerhalb der ersten Stufe eine wiederum im Nebenstrom arbeitende, mit Rücklaufschlamm beschickte Nitrifikation vorgesehen ist. Demgemäß wird der zu reinigende Abwassergesamtstrom in zwei Abwasserteilströme aufgeteilt, von denen der erste der ersten Reinigungsstufe zugeführt wird und der zweite der zweiten Reinigungsstufe. Der Ablauf der ersten Reinigungsstufe wird zusammen mit dem zweiten Abwasserteilstrom der zweiten Reinigungsstufe zugeführt. Der der ersten Reinigungsstufe zugeführte erste Abwasserteilstrom wird ganz oder zumindest teilweise einer Denitrifikationseinheit der ersten Reinigungsstufe zugeführt; dies schließt ein, daß - gemäß einer bevorzugten Weiterbildung der Erfindung - ein Teilstrom des ersten Abwasserteilstroms einer Nitrifikationseinheit der ersten Reinigungsstufe zugeführt werden kann. Des weiteren ist es wesentlich, daß der in der Zwischenkläreinheit der ersten Reinigungsstufe anfallende Schlamm - zumindest teilweise - direkt und/oder indirekt einer Nitrifikationseinheit der ersten Reinigungsstufe zugeführt wird und daß des weiteren der Ablauf der Nitrifikationseinheit der ersten Reinigungsstufe wiederum der Denitrifikationseinheit der ersten Reinigungsstufe zugeführt wird. Unter "indirekter" Schlammrückführung ist dabei insbesondere zu verstehen, daß der Überschußschlamm der ersten Reinigungsstufe mit dem Klarwasser aus der Zwischenklärung in die zweite Reinigungsstufe ausgeschwemmt wird, wobei ein Teil des in der Nachklärung der zweiten Reinigungsstufe anfallenden Gesamt-Überschußschlammes in die Nitrifikationseinheit der ersten Reinigungsstufe zurückgeführt wird.

Durch die Rückführung des Schlammes der Zwischenkläreinheit der ersten Reinigungsstufe - zumindest teilweise - zur Nitrifikationseinheit der ersten Reinigungsstufe und durch den Nebenstrombetrieb liegt die Belebtschlammkonzentration in der Nitrifikation der ersten Reinigungsstufe deutlich höher als in der Denitrifikation. Auf diese Weise ergibt sich eine sehr gute Stickstoffelimination bei hohen Durchsätzen durch die Abwasserreinigungsanlage.

Durch die vorliegende Erfindung läßt sich das bei konventionellen zweistufigen Belebungsanlagen bestehende Problem, daß nämlich in der ersten Reinigungsstufe der Kohlenstoff weitgehend entfernt wird, um in der zweiten Stufe eine stabile Nitrifikation zu erreichen, daß allerdings zur Denitrifikation des in der zweiten Stufe gebildeten Nitrats hinwiederum Kohlenstoff erforderlich ist, auf überraschend einfache Weise lösen. In diesem Zusammenhang ist bedeutsam, daß, anders als dies für konventionelle Belebungsanlagen mit vorgeschalteter Denitrifikation zutrifft, der nicht eliminierte Stickstoff im Ablauf der ersten Stufe in Form von Ammonium vorliegt. Dies begünstigt den nachfolgenden Stickstoffabbau in der zweiten Reinigungsstufe, der der Ablauf der ersten Reinigungsstufe zusammen mit dem zweiten Abwasserteilstrom zugeführt wird. Anders, als dies für das bekannte zweistufige Belebtschlammverfahren insbesondere nach der DE-2640875 C3 zutrifft, erfolgt gemäß der vorliegenden Erfindung eine weitgehende Stickstoffelimination in beiden Reinigungsstufen bei schwach belasteter (B_{TS} < 0,2 kg BSB₅/kg TS x d) erster und zweiter Reinigungsstufe.

Die Erfindung zeichnet sich des weiteren durch eine Mehrzahl weiterer Vorteile aus. So kommt eine erfindungsgemäße Abwasserreinigungsanlage beispielsweise aufgrund der erhöhten Belebtschlammkonzentration selbst bei hohen Abwasserdurchsätzen mit relativ geringen Beckenvolumina aus. Ferner läßt sich die erfindungsgemäße Anlage mit einem minimalen Finanzaufwand durch Umrüstung bestehender Anlagen herstellen. Die kompakte Bauform der Abwasserreinigungsanlage führt im übrigen zu einem geringeren Platzbedarf. Eine hohe Belüftungseffizienz und optimale BSB₅-Ausnutzung resultieren des weiteren in minimalen Betriebskosten. Bekannte Technik ermöglicht ferner eine einfache Betriebsführung; und die bau- und maschinentechnische Gestaltung der erfindungsgemäßen Abwasserreinigungsanlage ist vergleichsweise einfach. Ein weiterer Vorteil, zu dem weiter unten ausführlicher Stellung genommen wird, ist schließlich die verfahrensbedingte biologische Phosphatelimination.

Bevorzugt wird dem Nitrifikationsbecken der ersten Reinigungsstufe einerseits Rücklaufschlamm aus der Zwischenkläreinheit der ersten Reinigungsstufe und andererseits Recyclewasser aus der Denitrifikation der ersten Reinigungsstufe zugeführt. Durch Veränderung des Rückführverhältnisses von Rücklaufschlamm einerseits und Recyclewasser andererseits läßt sich die Stickstoffeliminationsleistung der ersten Reinigungsstufe einstellen. Es läßt sich eine Stickstoffelimination in der ersten Reinigungsstufe von über 75 % erreichen.

Eine bevorzugte Weiterbildung der Erfindung zeichnet sich dadurch aus, daß in der Zwischenkläreinheit der ersten Reinigungsstufe, ggf. in einem dieser zugeordneten externen Becken, eine Schlammeindickung von mindestens 3 Stunden erfolgt. In dieser Hinsicht ermöglicht die vorliegende Erfindung ganz neue Wege gegenüber der konventionellen Abwasserreinigungstechnik. Denn nach dem einschlägigen Arbeitsblatt A131 wird zur sicheren Schlammrückhaltung die Eindickzeit auf 2 Stunden begrenzt, um einerseits Denitrifikationserscheinungen mit Schwimmschlammbildung und andererseits einer Phospatrücklösung vorzubeugen. Beide Effekte in Klärbecken konventioneller Abwasserreinigungsanlagen sind nachteilig. In Anwendung der vorliegenden Erfindung tritt hingegen in der Zwischenkläreinheit der ersten Reinigungsstufe eine Denitrifikation nicht auf, weil diese bereits in der direkt vorgelagerten Denitrifikationseinheit weitgehend abgeschlossen ist. Weiterhin werden Schlammeindickzeiten von mehr als 3 Stunden bewußt eingestellt, um eine höhere Belebtschlammkonzentration zu erreichen. Die dabei stattfindende Phosphatrücklösung wird zur biologischen Phosphatelimination genutzt. Eine in dieser Hinsicht bevorzugte Weiterbildung der Erfindung zeichnet sich dadurch aus, daß der Überschußschlamm der ersten Reinigungsstufe am Ablauf der Nitrifikationseinheit der ersten Reinigungsstufe ausgeschleust wird. Dies begünstigt die biologische Phosphatelimination in der ersten Reinigungsstufe unter Ausnutzung der Effekte, daß nämlich der Belebtschlamm unter anoxischen Bedingungen, nämlich während der (verlängerten) Eindickung in der Zwischenklärung vermehrt Phosphat abgibt (Phosphatrücklösung) und unter oxischen Bedingungen, nämlich in der Nitrifikationseinheit mehr Phosphat aufnimmt, als er vorher abgegeben hat. Dies macht sich die genannte bevorzugte Weiterbildung der Erfindung zunutze, indem der Abzug des Überschußschlammes der ersten Reinigungsstufe am Ablauf des Nitrifikationsbeckens der ersten Reinigungsstufe erfolgt; denn dort ist die vermehrte Phosphataufnahme des Belebtschlammes abgeschlossen. Somit ist bei dieser Weiterbildung der Erfindung die biologische Phosphatelimination verfahrensbedingt bereits enthalten. Es bedarf nicht der in konventionellen Anlagen eingesetzten Phosphatrücklösung zur biologischen Phosphatelimination in einem vorgeschalteten anoxischen Becken. Auch hier zeigt sich wieder der besondere Vorteil der Erfindung, nämlich die Bereitstellung einer kompakten, leistungsfähigen, betriebssicheren Abwasserreinigungsanlage.

Zur Steigerung des Reinigungsergebnisses sind in Anpassung des erfindungsgemäßen Verfahrens zur Abwasserreinigung an die jeweils vorliegenden Abwasserverhältnisse verschiedene Weiterbildungen der Erfindung möglich. So kann beispielsweise der Überschußschlamm aus einer Nachkläreinheit der zweiten Reinigungsstufe zumindest teilweise dem Rücklaufschlamm der ersten Reinigungsstufe zugegeben und der Nitrifikationseinheit der ersten Reinigungsstufe zugeführt werden. Umgekehrt ist es in gleicher Weise denkbar, daß ein Teil des Überschußschlammes aus der Zwischenklärung der ersten Reinigungsstufe einer Denitrifikationseinheit der zweiten Reinigungsstufe zugeführt wird. Weiter oben wurde bereits dargelegt, daß der Nitrifikationseinheit der ersten Reinigungsstufe bevorzugt ein Teil des Ablaufs der Denitrifikationseinheit der ersten Reinigungsstufe als Recyclestrom zugeführt wird. Alternativ oder aber additiv hierzu kann der Nitrifikationseinheit der ersten Reinigungsstufe auch ein Teil des ersten Abwasserteilstromes und/oder ammoniumreiches Zentrat bzw. Trübwasser aus einer Schlammaufbereitung zugeführt werden. Auf diese Weise lassen sich die Verhältnisse in der Nitrifikationseinheit optimal einstellen.

Die im Rahmen der Erfindung vorgesehene zweite Reinigungsstufe kann auf beliebige Weise als konventionelle biologische Abwasserreinigung ausgebildet sein. Insbesondere kommen für die zweite Reinigungsstufe konventionelle Abwasserreinigungseinrichtungen mit vorgeschalteter, simultaner oder intermittierender Denitrifikation in Betracht, wobei in gleicher Weise Belebtschlamm oder Festbettsysteme eingesetzt werden können. Dabei kann gemäß einer weiteren bevorzugten Ausgestaltung der Erfindung der Ablauf der Zwischenkläreinheit der ersten Reinigungsstufe einer Nitrifikationseinheit und der zweite Abwasserteilstrom einer Denitrifikationseinheit der zweiten Reinigungsstufe zugeführt werden.

Eine weitere bevorzugte Weiterbildung der Erfindung zeichnet sich dadurch aus, daß der erste Abwasserteilstrom unabhängig von Schwankungen des Abwassergesamtstroms konstant gehalten wird. Indem der der ersten Reinigungsstufe zugeführte erste Abwasserteilstrom konstant gehalten wird, was durch die Nebenschlußanbindung der ersten Reinigungsstufe möglich ist, bedarf die Zwischenkläreinheit der ersten Reinigungsstufe keiner Speicherzone, die bei konventionellen Abwasserreinigungsanlagen dazu dient, bei einsetzendem Regenwetter mit entsprechend sprungartig gesteigertem Abwassergesamtstrom die Ausschwemmung des Belebtschlammes aus der Biologie zu unterbinden. Der Wegfall der bei konventionellen Abwasserreinigungsanlagen erforderlichen Speicherzone der Zwischenkläreinheit der ersten Reinigungsstufe wirkt sich wiederum in deren besonders kompaktem Aufbau bei geringem Platzbedarf aus.

Im folgenden wird die Erfindung anhand dreier in der Zeichnung dargestellter Ausführungsbeispiele näher erläutert. Dabei veranschaulicht
- Fig. 1: anhand eines Flußdiagramms eine erste bevorzugte Ausführungsform,
- Fig. 2: anhand eines Flußdiagramms eine zweite bevorzugte Ausführungsform des erfindungsgemäßen Abwasserreinigungsverfahrens und
- Fig. 3: ebenfalls anhand eines Flußdiagramms eine dritte bevorzugte Ausführungsform des erfindungsgemäßen Abwasserreinigungsverfahrens.

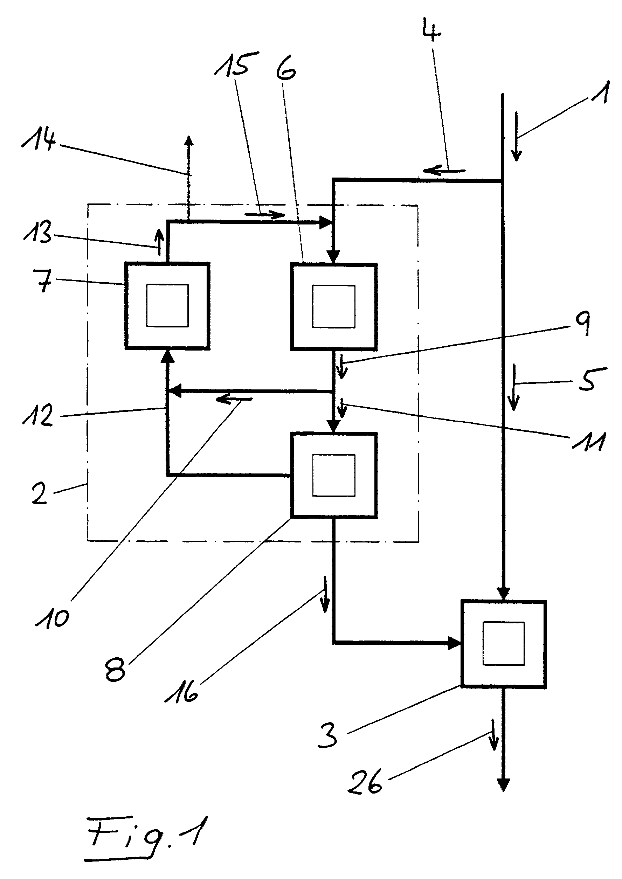

Gemäß Fig. 1 sind zur Klärung des Abwassergesamtstromes 1 zwei Reinigungsstufen vorgesehen, nämlich eine erste Reinigungsstufe 2 und eine zweite Reinigungsstufe 3. Die erste Reinigungsstufe 2 arbeitet dabei im Nebenstorm, d.h., von dem Abwassergesamtstrom 1 wird ein erster Abwasserteilstrom 4 abgezweigt, der die erste Reinigungsstufe 2 durchströmt. Dieser erste Abwasserteilstrom 4 wird dabei unabhängig von möglichen Schwankungen des Abwassergesamtstromes 1 konstant gehalten. Der verbleibende zweite Abwasserteilstrom 5 wird unmittelbar der zweiten Reinigungsstufe 3 zugeführt.

Die erste Reinigungsstufe 2 umfaßt eine Denitrifikationseinheit 6, eine Nitrifikationseinheit 7 und eine Zwischenkläreinheit 8. Der erste Abwasserteilstrom 4 wird der Denitrifikationseinheit 6 zugeführt. Der Ablauf 9 der Denitrifikationseinheit 6 wird aufgeteilt in einen Recyclestrom 10, der der Nitrifikationseinheit 7 zugeführt wird, und einen Klärwasserstrom 11, der der Zwischenkläreinheit 8 zugeführt wird. Der in der Zwischenkläreinheit 8 anfallende Schlamm wird nach einer mindestens dreistündigen Eindickung (ggf. in einem nicht dargestellten externen Becken) über eine Schlammrückführung 12 zu der Nitrifikationseinheit 7 zurückgeführt. In dem oxischen Milieu der Nitrifikationseinheit 7 wird das in dem Schlamm aufgrund der mehr als dreistündigen Eindickung rückgelöste Phosphat wieder vom Schlamm aufgenommen. Aus dem nitratreichen Ablauf 13 der Nitrifikationseinheit 7 wird der Überschußschlamm der ersten Reinigungsstufe 2 über einen Überschußschlammabzug 14 ausgeschleust. Der verbleibende nitratreiche Abwasserstrom 15 wird der Denitrifikationseinheit 6 zugeführt. Durch den Nebenstrombetrieb der Nitrifikationseinheit 7, in erster Linie mit Rücklaufschlamm 12 und Recyclewasser 10, ist die Belebtschlammkonzentration in der Nitrifikationseinheit 7 deutlich höher als in der Denitrifikationseinheit 6 der ersten Reinigungsstufe 2.

Der Ablauf 16 der Zwischenkläreinheit 8 wird ebenso wie der zweite Abwasserteilstrom 5 der zweiten Reinigungsstufe 3 zugeführt. Diese ist als konventionell arbeitende Belebtschlammstufe ausgebildet, so daß es insoweit weiterer Erläuterungen nicht bedarf.

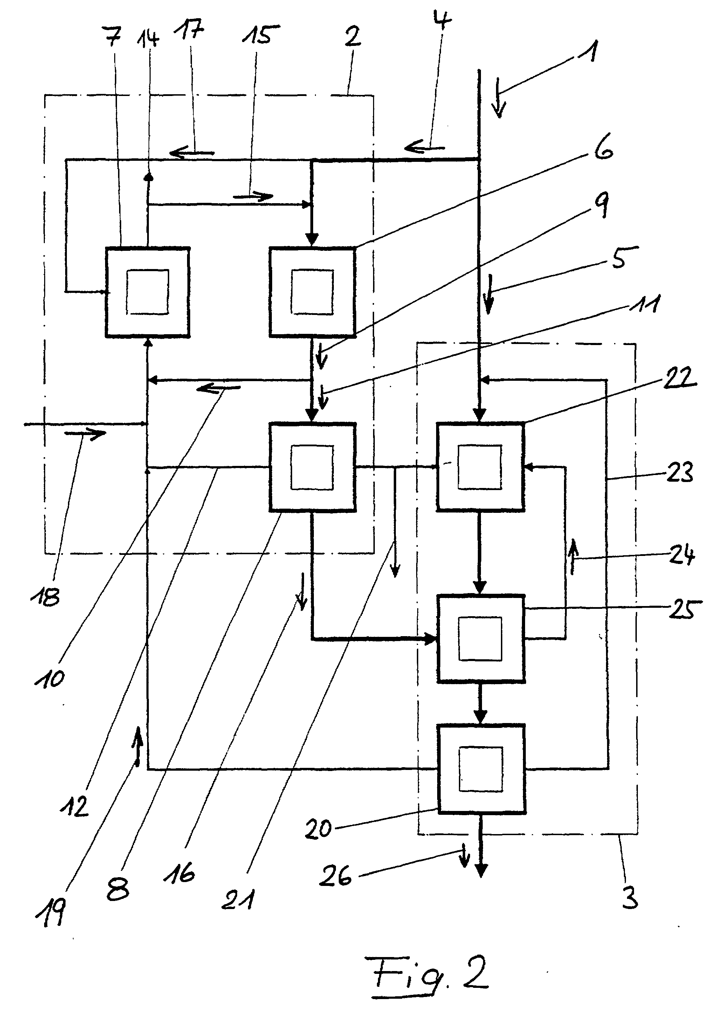

Die in Fig. 2 veranschaulichte Verfahrensführung stimmt in wesentlichen Punkten mit der Verfahrensführung gemäß Fig. 1 überein. Insoweit wird, um Wiederholungen zu vermeiden, auf die vorstehenden Ausführungen verwiesen.

Folgende Abweichungen und/oder Ergänzungen der Verfahrensführung sind in Fig. 2 veranschaulicht: Zum einen wird der erste Abwasserteilstrom 4 nicht vollständig der Denitrifikationseinheit 6 zugeführt. Vielmehr wird von dem ersten Abwasserteilstrom 4 ein Teilstrom 17 abgezweigt, der der Nitrifikationseinheit 7 zugeführt wird. Ferner wird der Nitrifikationseinheit 7 ammoniumreiches Zentrat bzw. Trübwasser 18 aus einer Schlammaufbereitung zugeführt. Des weiteren wird der Nitrifikationseinheit 7 der ersten Reinigungsstufe 2 Schlamm 19 zugeführt, der in der Nachkläreinheit 20 der zweiten Reinigungsstufe 3 anfällt. Und schließlich erfolgt die Ausschleusung 21, 14 des Überschußschlammes aus beiden Reinigungsstufen an der Zwischenkläreinheit 8 und/oder im Ablauf der Nitrifikationseinheit 7 der ersten Reinigungsstufe 2. Der in der Zwischenkläreinheit 8 anfallende Schlamm wird im übrigen, soweit er nicht zur Nitrifikationseinheit 7 der ersten Reinigungsstufe zurückgeführt oder aber über den Schlammabzug 21 ausgeschleust wird, einer Denitrifikationseinheit 22 der zweiten Reinigungsstufe 3 zugeführt.

Veranschaulicht ist in Fig. 2 schließlich noch die Schlammrückführung 23 von der Nachkläreinheit 20 der zweiten Reinigungsstufe 3 in den zweiten Abwasserteilstrom 5. Ferner ist der Recyclestrom 24 von der Nitrifikationseinheit 25 der zweiten Reinigungsstufe 3 zu der Denitrifikationseinheit 22 der zweiten Reinigungsstufe 3 zu erkennen.

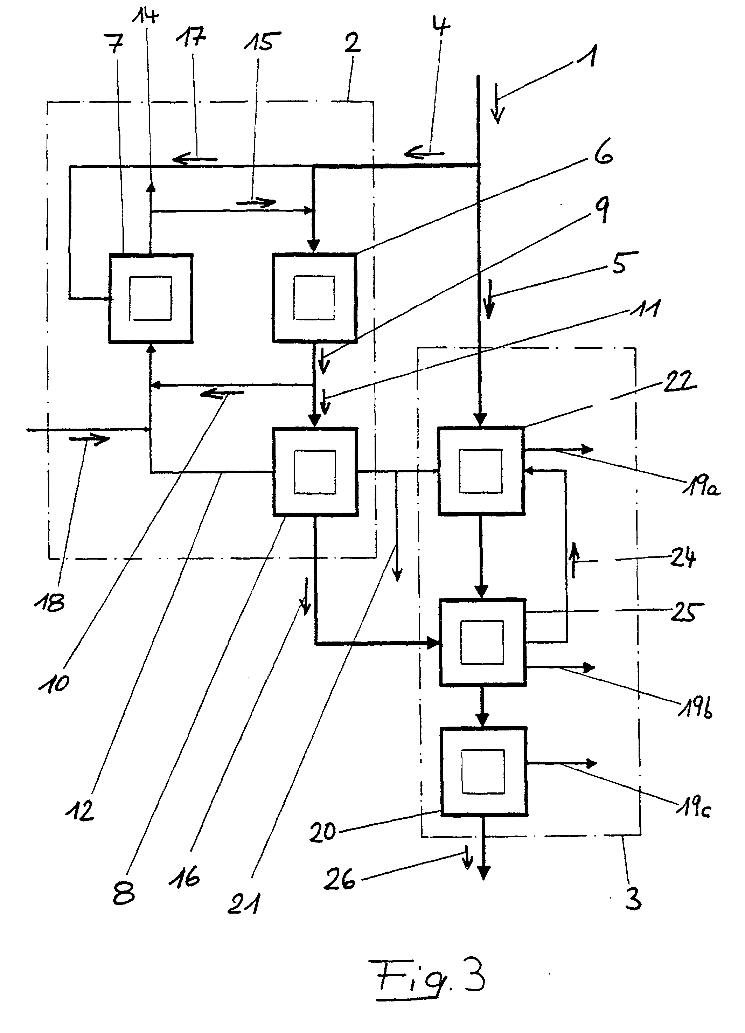

Die in Fig. 3 veranschaulichte Verfahrensführung stimmt in wesentlichen Punkten mit der Verfahrensführung gemäß Fig. 2 überein. Insoweit wird, um Wiederholungen zu vermeiden, auf die vorstehenden Ausführungen verwiesen.

Folgende Abweichungen und/oder Ergänzungen der Verfahrensführung sind in Fig. 3 veranschaulicht: Die zweite Reinigungsstufe 3 ist als 3-stufiges Festbettsystem dargestellt. Das Festbettsystem der zweiten Reinigungsstufe 3 besteht aus Denitrifikationseinheit 22, Nitrifikationseinheit 25 und Restdenitrifikationseinheit 20. Der Schlammtransfer 21, 19 aus der Zwischenkläreinheit 8 in die Denitrifikationseinheit 22 und aus der Nachkläreinheit 20 (jetzt Restdenitrifikationseinheit 20) in die Nitrifikationseinheit 7 entfällt. Die Ausschleusung des Überschußschlammes 19a, 19b und 19c aus der zweiten Reinigungsstufe 3 erfolgt durch Spülung der einzelnen Festbettstufen 22, 25 und 20. Infolge der Festbett-Technologie entfällt eine Schlammrückführung (23 in Fig. 2).

Sowohl in Fig. 1 wie auch in den Fig. 2 und 3 ist mit dem Bezugszeichen 26 der Ablauf des gereinigten Abwassers aus der zweiten Reinigungsstufe 3 gekennzeichnet.

## Patentansprüche

1. Mehrstufiges Verfahren zur Abwasserreinigung, insbesondere zur Reinigung kommunaler Abwässer, mit folgenden Merkmalen:
- Der Abwassergesamtstrom (1) wird in einen ersten (4) und einen zweiten (5) Abwasserteilstrom aufgeteilt;
- der erste Abwasserteilstrom (4) wird zumindest teilweise einer Denitrifikationseinheit (6) einer ersten Reinigungsstufe (2) zugeführt;
- der Ablauf (9) der Denitrifikationseinheit (6) der ersten Reinigungsstufe (2) wird zumindest teilweise einer Zwischenkläreinheit (8) der ersten Reinigungsstufe (2) zugeführt;
- der Schlamm der Zwischenkläreinheit (8) der ersten Reinigungsstufe (2) wird zumindest teilweise direkt und/oder indirekt einer Nitrifikationseinheit (7) der ersten Reinigungsstufe (2) zugeführt;
- der Ablauf (13) der Nitrifikationseinheit (7) der ersten Reinigungsstufe (2) wird der Denitrifikationseinheit (6) der ersten Reinigungsstufe (2) zugeführt;
- der Ablauf (16) der Zwischenkläreinheit (8) der ersten Reinigungsstufe (2) wird zusammen mit dem zweiten Abwasserteilstrom (5) der zweiten Reinigungsstufe (3) zugeführt.

2. Abwasserreinigungsverfahren nach Anspruch 1,
**dadurch gekennzeichnet,**
**daß** ein Teil des Ablaufs (9) der Denitrifikationseinheit (6) der ersten Reinigungsstufe (2) als Recyclestrom (10) der Nitrifikationseinheit (7) der ersten Reinigungsstufe (2) zugeführt wird.

3. Abwasserreinigungsverfahren nach einem der Ansprüche 1 oder 2,
**dadurch gekennzeichnet,**
**daß** in der ersten Reinigungsstufe (2) eine Schlammeindickung von mindestens drei Stunden erfolgt.

4. Abwasserreinigungsverfahren nach einem der Ansprüche 1 bis 3,
**dadurch gekennzeichnet,**
**daß** die Schlammeindickung in der ersten Reinigungsstufe (2) in einem der Zwischenkläreinheit (8) nachgeschalteten externen Becken erfolgt.

5. Abwasserreinigungsverfahren nach einem der Ansprüche 1 bis 4,
**dadurch gekennzeichnet,**
**daß** der Überschußschlamm (14) der ersten Reinigungsstufe (2) am Ablauf (13) der Nitrifikationseinheit (7) der ersten Reinigungsstufe (2) ausgeschleust wird.

6. Abwasserreinigungsverfahren nach einem der Ansprüche 1 bis 5,
**dadurch gekennzeichnet,**
**daß** der Überschußschlamm (19) aus einer Nachkläreinheit (20) der zweiten Reinigungsstufe (3) zumindest teilweise der Nitrifikationseinheit (7) der ersten Reinigungsstufe (2) zugeführt wird.

7. Abwasserreinigungsverfahren nach einem der Ansprüche 1 bis 6,
**dadurch gekennzeichnet,**
**daß** der Ablauf (16) der Zwischenkläreinheit (8) der ersten Reinigungsstufe (2) einer Nitrifikationseinheit (25) und daß der zweite Abwasserteilstrom (5) einer Denitrifikationseinheit (22) der zweiten Reinigungsstufe (3) zugeführt wird.

8. Abwasserreinigungsverfahren nach einem der Ansprüche 1 bis 7,
**dadurch gekennzeichnet,**
**daß** in der zweiten Reinigungsstufe (3) eine konventionelle biologische Abwasserreinigung mit vorgeschalteter, simultaner oder intermittierender Denitrifikation erfolgt.

9. Abwasserreinigungsverfahren nach einem der Ansprüche 1 bis 8,
**dadurch gekennzeichnet,**
**daß** der erste Abwasserteilstrom (4) unabhängig von Schwankungen des Abwassergesamtstroms (1) konstant gehalten wird.

10. Abwasserreinigungsverfahren nach einem der Ansprüche 1 bis 9,
**dadurch gekennzeichnet,**
**daß** ein Anteil (17) des ersten Abwasserteilstromes (4) der Nitrifikationseinheit (7) der ersten Reinigungsstufe (2) zugeführt wird.

11. Abwasserreinigungsverfahren nach einem der Ansprüche 1 bis 10,
**dadurch gekennzeichnet,**
**daß** der Nitrifikationseinheit (7) der ersten Reinigungsstufe (2) ammoniumreiches Zentrat bzw. Trübwasser (18) aus einer Schlammaufbereitung zugeführt wird.

12. Abwasserreinigungsverfahren nach einem der Ansprüche 1 bis 11,
**dadurch gekennzeichnet,**
**daß** ein Teil des in der Zwischenkläreinheit (8) der ersten Reinigungsstufe (2) anfallenden Schlammes einer Denitrifikationseinheit (22) der zweiten Reinigungsstufe (3) zugeführt wird.

13. Abwasserreinigungsverfahren nach einem der Ansprüche 1 bis 12,
**dadurch gekennzeichnet,**
**daß** in der zweiten Reinigungsstufe (3) eine biologische Abwasserreinigung mit Festbett-Technologie erfolgt

14. Mehrstufige Abwasserreinigungsanlage, insbesondere zur Reinigung kommunaler Abwässer, mit folgenden Merkmalen:
- Der Abwasserzulauf ist mit dem Zulauf einer Denitrifikationseinheit (6) einer ersten Reinigungsstufe (2) und mit dem Zulauf einer parallel zur ersten Reinigungsstufe geschalteten zweiten Reinigungsstufe (3) verbunden;
- die erste Reinigungsstufe (2) umfaßt neben der Denitrifikationseinheit (6) eine Nitrifikationseinheit (7) und eine Zwischenkläreinheit (8);
- der Ablauf der Denitrifikationseinheit (6) der ersten Reinigungsstufe ist mit dem Zulauf der Zwischenkläreinheit (8) der ersten Reinigungsstufe (2) verbunden;
- die Zwischenkläreinheit (8) der ersten Reinigungsstufe (2) ist über eine Schlammrückführung (12) mit dem Zulauf der Nitrifikationseinheit (7) der ersten Reinigungsstufe (2) verbunden;
- der Ablauf der Nitrifikationseinheit (7) der ersten Reinigungsstufe (2) ist mit dem Zulauf der Denitrifikationseinheit (6) der ersten Reinigungsstufe (2) verbunden;
- der Ablauf der Zwischenkläreinheit (8) der ersten Reinigungsstufe (2) ist mit dem Zulauf der zweiten Reinigungsstufe (3) verbunden.

## Claims

1. Multistage process for waste water purification, in particular for purifying municipal waste water, with the following features:
- The total waste water stream (1) is divided into a first (4) and a second (5) partial waste water stream;
- the first partial waste water stream (4) is supplied at least in part to a denitrification unit (6) of the first purification stage (2);
- the discharge (9) of the denitrification unit (6) of the first purification stage (2) is supplied at least in part to an intermediate clarification unit (8) of the first purification stage (2);
- the sludge of the intermediate clarification unit (8) of the first purification stage (2) is supplied at least in part directly and/or indirectly to a nitrification unit (7) of the first purification stage (2) ;
- the discharge (13) of the nitrification unit (7) of the first purification stage (2) is supplied to the denitrification unit (6) of the first purification stage (2);
- the discharge (16) of the intermediate clarification unit (8) of the first purification stage (2) is supplied together with the second partial waste water stream (5) to the second purification stage (3).

2. Waste water purification process according to Claim 1,
**characterised in that** some of the discharge (9) of the denitrification unit (6) of the first purification stage (2) is supplied as a recycled stream (10) to the nitrification unit (7) of the first purification stage (2).

3. Waste water purification process according to either of Claims 1 and 2,
**characterised in that** sludge thickening over at least three hours takes place in the first purification stage (2).

4. Waste water purification process according to any one of Claims 1 to 3,
**characterised in that** the sludge thickening in the first purification stage (2) takes place in an external tank downstream of the intermediate clarification unit (8).

5. Waste water purification process according to any one of Claims 1 to 4,
**characterised in that** the excess sludge (14) of the first purification stage (2) is removed at the discharge point (13) of the nitrification unit (7) of the first purification stage (2).

6. Waste water purification process according to any one of Claims 1 to 5,
**characterised in that** the excess sludge (19) from a final clarification unit (20) of the second purification stage (3) is supplied at least in part to the nitrification unit (7) of the first purification stage (2).

7. Waste water purification process according to any one of Claims 1 to 6,
**characterised in that** the discharge (16) of the intermediate clarification unit (8) of the first purification stage (2) is supplied to a nitrification unit (25), and that the second partial waste water stream (5) is supplied to a denitrification unit (22) of the second purification stage (3).

8. Waste water purification process according to any one of Claims 1 to 7,
**characterised in that** conventional biological waste water purification with previous, simultaneous or intermittent denitrification takes place in the second purification stage (3).

9. Waste water purification process according to any one of Claims 1 to 8,
**characterised in that** the first partial waste water stream (4) is maintained constant irrespective of fluctuations in the total waste water stream (1).

10. Waste water purification process according to any one of Claims 1 to 9,
**characterised in that** a portion (17) of the first partial waste water stream (4) is supplied to the nitrification unit (7) of the first purification stage (2).

11. Waste water purification process according to any one of Claims 1 to 10,
**characterised in that** ammonium-rich concentrate or turbid water (18) from a sludge conditioning system is supplied to the nitrification unit (7) of the first purification stage (2).

12. Waste water purification process according to any one of Claims 1 to 11,
**characterised in that** some of the sludge resulting in the intermediate clarification unit (8) of the first purification stage (2) is supplied to a denitrification unit (22) of the second purification stage (3).

13. Waste water purification process according to any one of Claims 1 to 12,
**characterised in that** biological waste water purification using fixed-bed technology takes place in the second purification stage (3).

14. Multistage waste water purification installation, in particular for purifying municipal waste water, with the following features:
- the waste water feed is connected to the feed of a denitrification unit (6) of a first purification stage (2) and to the feed of a second purification stage (3), which is connected in parallel with the first purification stage;
- in addition to the denitrification unit (6), the first purification stage (2) comprises a nitrification unit (7) and an intermediate clarification unit (8);
- the discharge point of the denitrification unit (6) of the first purification stage is connected to the feed of the intermediate clarification unit (8) of the first purification stage (2);
- the intermediate clarification unit (8) of the first purification stage (2) is connected via a sludge return (12) to the feed of the nitrification unit (7) of the first purification stage (2);
- the discharge point of the nitrification unit (7) of the first purification stage (2) is connected to the feed of the denitrification unit (6) of the first purification stage (2);
- the discharge point of the intermediate clarification unit (8) of the first purification stage (2) is connected to the feed of the second purification stage (3).

## Revendications

1. Procédé à plusieurs étapes pour l'épuration des eaux usées, en particulier pour l'épuration des eaux usées communales, présentant les étapes suivantes:
- le flux global d'eaux usées (1) est subdivisé en un premier (4) et un deuxième (5) flux partiel d'eaux usées;
- le premier flux partiel d'eaux usées (4) est amené au moins partiellement à une unité de dénitrification (6) d'un premier étage d'épuration (2);
- l'évacuation (9) de l'unité de dénitrification (6) du premier étage d'épuration (2) est amenée au moins partiellement à une unité de clarification intermédiaire (8) du premier étage d'épuration (2);
- les boues de l'unité de clarification intermédiaire (8) du premier étage d'épuration (2) sont amenées, au moins partiellement, directement et/ou indirectement à une unité de nitrification (7) du premier étage d'épuration (2);
- l'évacuation (13) de l'unité de nitrification (7) du premier étage d'épuration (2) est amenée à l'unité de dénitrification (6) du premier étage d'épuration (2);
- l'évacuation (16) de l'unité de clarification intermédiaire (8) du premier étage d'épuration (2) est amenée au deuxième étage d'épuration (3), conjointement avec le deuxième flux partiel d'eaux usées (5).

2. Procédé d'épuration des eaux usées selon la revendication 1, **caractérisé en ce qu'**une partie de l'évacuation (9) de l'unité de dénitrification (6) du premier étage d'épuration (2) est amenée, à titre de flux de recyclage (10), à l'unité de nitrification (7) du premier étage d'épuration (2).

3. Procédé d'épuration des eaux usées selon l'une des revendications 1 ou 2, **caractérisé en ce qu'**une concentration des boues, d'une durée d'au moins trois heures, est effectuée dans le premier étage d'épuration (2).

4. Procédé d'épuration des eaux usées selon l'une des revendications 1 à 3, **caractérisé en ce que** la concentration des boues effectuée dans le premier étage d'épuration (2), se fait dans un bassin externe, installé en aval de l'unité de clarification intermédiaire (8).

5. Procédé d'épuration des eaux usées selon l'une des revendications 1 à 4, **caractérisé en ce que** l'excès de boue (14) du premier étage d'épuration (2) est évacué par éclusage à l'évacuation (13) de l'unité de nitrification (7) du premier étage d'épuration (2).

6. Procédé d'épuration des eaux usées selon l'une des revendications 1 à 5, **caractérisé en ce que** l'excès de boue (19) issu de l'unité de reclarification (20) du deuxième étage d'épuration (3) est amené au moins partiellement à l'unité de nitrification (7) du premier étage d'épuration (2).

7. Procédé d'épuration des eaux usées selon l'une des revendications 1 à 6, **caractérisé en ce que** l'évacuation (16) de l'unité de clarification intermédiaire (8) du premier étage d'épuration (2) est amenée à une unité de nitrification (25) et **en ce que** le deuxième flux partiel d'eaux usées (5) est amené à une unité de dénitrification (22) du deuxième étage d'épuration (3).

8. Procédé d'épuration des eaux usées selon l'une des revendications 1 à 7, **caractérisé en ce que**, dans le deuxième étage d'épuration (3), est effectuée une épuration biologique classique des eaux usées, avec dénitrification amont, simultanée ou intermittente.

9. Procédé d'épuration des eaux usées selon l'une des revendications 1 à 8, **caractérisé en ce que** le premier flux partiel d'eaux usées (4) est maintenu constant, indépendamment des fluctuations du flux global d'eaux usées (1).

10. Procédé d'épuration des eaux usées selon l'une des revendications 1 à 9, **caractérisé en ce qu'**une partie (17) du premier flux partiel d'eaux usées (4) est amenée à l'étage de nitrification (7) du premier étage d'épuration (2).

11. Procédé d'épuration des eaux usées selon l'une des revendications 1 à 10, **caractérisé en ce qu'**à l'unité de nitrification (7) du premier étage d'épuration (2) est amené un centrat ou une eau trouble (19) riche en ammonium, provenant d'une préparation des boues.

12. Procédé d'épuration des eaux usées selon l'une des revendications 1 à 11, **caractérisé en ce qu'**une partie de la boue produite dans l'unité de clarification intermédiaire (8) du premier étage d'épuration (2) est amenée à une unité de dénitrification (22) du deuxième étage d'épuration (3).

13. Procédé d'épuration des eaux usées selon l'une des revendications 1 à 12, **caractérisé en ce qu'**une épuration biologique des eaux usées est effectuée suivant la technologie à lit fixe dans le deuxième étage d'épuration (3).

14. Installation d'épuration des eaux usées à plusieurs étages, en particulier pour l'épuration des eaux usées communales, présentant les caractéristiques suivantes:
- l'amenée d'eaux usées est reliée à l'amenée d'une unité de dénitrification (6) d'un premier étage d'épuration (2) et à l'amenée d'un deuxième étage d'épuration (3), mis en circuit en parallèle du premier étage d'épuration;
- le premier étage d'épuration (2) comprend, outre une unité de dénitrification (6), une unité de nitrification (7) et une unité de clarification intermédiaire (8);
- l'évacuation de l'unité de dénitrification (6) du premier étage d'épuration est reliée à l'amenée de l'unité de clarification intermédiaire (8) du premier étage d'épuration (2);
- l'unité de clarification intermédiaire (8) du premier étage d'épuration (2) est reliée, par un recyclage des boues (12), à l'amenée de l'unité de nitrification (7) du premier étage d'épuration (2);
- l'évacuation de l'unité de nitrification (7) du premier étage d'épuration (2) est reliée à l'amenée de l'unité de dénitrification (6) du premier étage d'épuration (2);
- l'évacuation de l'unité de clarification intermédiaire du premier étage d'épuration (2) est reliée à l'amenée du deuxième étage d'épuration (3).
